# EUROPÄISCHE PATENTSCHRIFT

(11) **EP 0 359 931 B1**
(45) Veröffentlichungstag und Bekanntmachung des Hinweises auf die Patenterteilung: **31.03.1993**
(21) Anmeldenummer: 89112914.0
(22) Anmeldetag: 14.07.1989
(51) Int. Cl.: B01D 7/02, C22B 7/02, B01D 53/00, B01D 53/34

(54) **Verfahren zur Trennung von dampfförmigen Schwermetallverbindungen von einem Trägergas und Vorrichtung zur Durchführung des Verfahrens**
Process and apparatus for separating vaporous heavy metal compounds from a carrier gas
Procédé et dispositif de séparation de composants de métaux lourds à l'état vapeur à partir d'un gaz support

(30) Priorität: 05.09.1988 CH 3311/88; 02.02.1989 CH 359/89
(43) Veröffentlichungstag der Anmeldung: 28.03.1990
(73) Patentinhaber: ASEA BROWN BOVERI AG, 5400 Baden (CH)
(72) Erfinder: Hirth, Michael, Dr., CH-5507 Mellingen (CH); Jochum, Joachim, Dr., CH-5405 Baden (CH); Jodeit, Harald, Dr., D-7890 Waldshut (DE); Wieckert, Christian, Dr., CH-5405 Baden (CH)

(56) Entgegenhaltungen:
- EP-A- 0 188 700
- DE-A- 2 415 169
- US-A- 4 066 424

## Beschreibung

### TECHNISCHES GEBIET

Die Erfindung geht aus von einem Verfahren zur Trennung von dampfförmigen Schwermetallverbindungen von einem Trägergas und zur Desublimation derselben, bei welchem die in einem Schmelzofen entstandenen dampfförmigen Schwermetallverbindungen zusammen mit dem Trägergas als Gas-Dampf-Gemisch aus diesem Schmelzofen ausgetragen werden und anschliessend desublimieren. Insbesondere betrifft sie ferner eine Vorrichtung zur Durchführung dieses Verfahrens mit einem Schmelzofen mit Heizelementen, in welchem ein Trägergas mit den dampfförmigen Schwermetallverbindungen ein Gas-Dampf-Gemisch bildet, und mit einer Austragöffnung für das Gas-Dampf-Gemisch, welche zu einer Kühleinrichtung führt.

### STAND DER TECHNIK

Es ist bekannt, dass dampfförmige Schwermetallverbindungen aus Schmelzöfen mittels eines Trägergases ausgetragen werden können. Erfolgt dann in einer Kühleinrichtung eine Abkühlung des ausgetragenen Gas-Dampf-Gemisches, so desublimieren die dampfförmigen Schwermetallverbindungen und in der Kühleinrichtung setzt sich ein Niederschlag ab. Dieser Niederschlag muss von Zeit zu Zeit entfernt werden, was nur mit vergleichsweise grossem manuellen Aufwand durch Auskratzen erfolgen kann. Erst danach kann dieser Niederschlag weiter verarbeitet werden. Für eine grosstechnische Anwendung ist dieses Verfahren zu umständlich.

Aus der Offenlegungsschrift DE 24 15 169 ist ein Verfahren und eine Vorrichtung zur Desublimation von in Gasen enthaltenen, desublimierbaren Verbindungen bekannt, bei welchem von der Wand der Vorrichtung abgetrennte, kühle Partikel als Kerne für die Anlagerung von Desublimationsprodukten dienen.Die Wand der Vorrichtung wird dabei intensiv gekühlt und kühlt die an der Wand angelagerten Partikel ehe diese abgetrennt werden. Für diese Kühlung muss vergleichsweise viel Energie aufgewendet werden.

Aus der Schrift EP 0 188 700 A3 ist ein Desublimationsverfahren und eine entsprechende Vorrichtung bekannt. Bei diesem Verfahren prallen das kühlende Gas und das zu kühlende Gas-Dampf-Gemisch mit hoher Geschwindigkeit aufeinander. Dieses Verfahren wird nur dann eingesetzt, wenn beide Komponenten etwa die gleiche Geschwindigkeit aufweisen.

### DARSTELLUNG DER ERFINDUNG

Hier will die Erfindung Abhilfe schaffen. Die Erfindung, wie sie in den unabhängigen Ansprüchen gekennzeichnet ist, löst die Aufgabe, ein Verfahren zur Trennung von dampfförmigen Schwermetallverbindungen von einem Trägergas anzugeben, welches grosstechnisch angewendet werden kann, und eine Vorrichtung zur Durchführung dieses Verfahrens zu schaffen, welche vergleichsweise einfach zu betreiben ist.

Die durch die Erfindung erreichten Vorteile sind im wesentlichen darin zu sehen, dass mit einfachen Mitteln eine saubere Trennung der Schwermetallverbindungen vom Trägergas möglich ist, ohne die Umwelt zu gefährden.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnungen, welche lediglich eine Ausführung darstellen, näher erläutert.

### KURZE BESCHREIBUNG DER ZEICHNUNGEN

Es zeigen:
- Fig. 1: ein Blockdiagramm einer ersten Ausgestaltung des erfindungsgemässen Verfahrens,
- Fig. 2: eine schematische Darstellung einer ersten erfindungsgemässen Vorrichtung,
- Fig. 3: ein Blockdiagramm einer zweiten Ausgestaltung des erfindungsgemässen Verfahrens,
- Fig. 4: eine schematische Darstellung einer zweiten erfindungsgemässen Vorrichtung,
- Fig.5: ein Blockdiagramm einer dritten Ausgestaltung des erfindungsgemässen Verfahrens,
- Fig.6: eine schematische Darstellung einer dritten erfindungsgemässen Vorrichtung,
- Fig.7: ein Blockdiagramm einer vierten Ausgestaltung des erfindungsgemässen Verfahrens, und
- Fig.8: eine schematische Darstellung einer vierten erfindungsgemässen Vorrichtung.

Bei allen Figuren sind gleich wirkende Elemente mit gleichen Bezugszeichen versehen.

### WEGE ZUR AUSFÜHRUNG DER ERFINDUNG

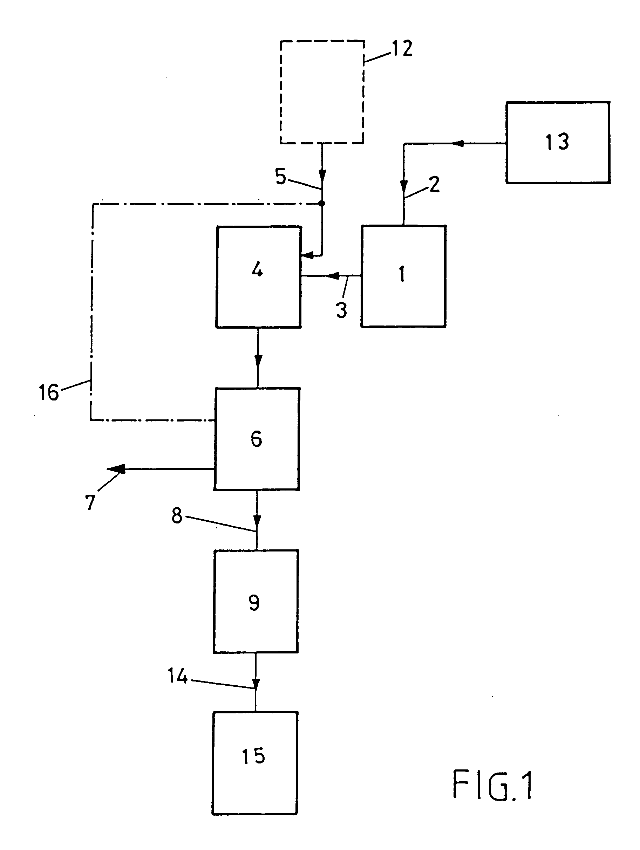

Das Blockdiagramm Fig. 1 zeigt ein erstes erfindungsgemässes Verfahren, bei welchem Luft als Trägergas eingesetzt wird. Ein Schmelzofen 1 ist mit luftbeblasenen, elektrischen Heizelementen versehen. Durch eine Leitung 2 wird die Einspeisung dieser Blasluft in den Schmelzofen 1 angedeutet. Die Beschikkung des Schmelzofens 1 mit zu schmelzenden Partikeln und die Austragung des Schmelzgutes ist hier nicht dargestellt. Im Schmelzofen 1 dient die Blasluft als Trägergas für beim Schmelzen entstandene dampfförmige Schwermetallverbindungen. Sie bildet mit diesen ein Gas-Dampf-Gemisch, welches durch eine Austragöffnung, hier als Leitung 3 bezeichnet, ausgetragen wird. Diese Leitung 3 ist sehr kurz auszubilden, um eine Desublimation der dampfförmigen Schwermetallverbindungen an der Innenwand der Leitung 3 zu verhindern. Die Leitung 3 führt in eine Mischstrecke 4, wo dem Gas-Dampf-Gemisch zusätzlich durch eine Leitung 5 ein Gas oder Gasgemisch, hier ist dies Kaltluft, zugeführt wird. In dieser Mischstrecke 4 wird diese Kaltluft intensiv mit dem heissen Gas-Dampf-Gemisch verwirbelt und dieses dadurch abgekühlt. Das Gas-Dampf-Gemisch wird mit der 10- bis 100-fachen Volumenmenge Kaltluft verwirbelt. Bei dieser intensiven Abkühlung desublimieren die dampfförmigen Schwermetallverbindungen und bilden Partikel. Als Kondensationskeime für diese Partikel dienen winzige Staubteilchen, die durch das Dampf-Gas-Gemisch aus dem Schmelzofen 1 mitgerissen werden, ferner tritt auch spontane Kondensation auf. Diese Partikel werden durch das zusätzliche Gas oder Gasgemisch in einen Filter 6 gewirbelt und dort ausgefiltert. Der Pfeil 7 deutet die Austragung der Partikel, die im wesentlichen aus Schwermetallverbindungen bestehen, an. Nach dem Filter 6 führt eine Leitung 8 das Gas oder Gasgemisch und verbliebene Reste des Gas-Dampf-Gemisches in einen Saugzug 9. Dieser Saugzug 9 hält die Strömung des Gases oder Gasgemisches aufrecht, durch ihn wird in der Mischstrecke 4 zudem ein Unterdruck erzeugt. Anstelle des Saugzugs 9 kann auch ein gestrichelt angedeutetes Gebläse 12 Kaltluft in die Mischstrecke 4 transportieren. Es ist auch eine Kombination von Gebläse 12 und Saugzug 9 denkbar. Die Blasluft für die Beblasung der Heizelemente wird durch ein Gebläse 13 in die Leitung 2 eingespeist. Nach dem Saugzug 9 führt eine Leitung 14 das Gas oder Gasgemisch und die verbliebenen Reste des Gas-Dampf-Gemisches in eine Verbrennungsanlage 15.

Das beschriebene Verfahren kann beispielsweise vorteilhaft in einer Müllverbrennungsanlage eingesetzt werden, in deren Rauchgasreinigungsanlage vergleichsweise grosse Mengen Filterstaub mit angelagerten Schwermetallverbindungen anfallen. Dieser Filterstaub in Partikelform wird in dem Schmelzofen 1 eingeschmolzen und dabei von den Schwermetallverbindungen befreit, gleichzeitig wird das Volumen des Filterstaubes verringert. Die aus dem Saugzug 9 austretende, mit Resten des Dampf-Gas-Gemisches belastete Kaltluft, wird in den Ofen der bestehenden Müllverbrennungsanlage rückgeführt, und in der diesem Ofen nachgeschalteten Rauchgasreinigungsanlage gereinigt, eine zusätzliche Rauchgasreinigungsanlage wird daher nicht benötigt. Die aus dem Filter 6 ausgetragenen Schwermetallverbindungen können zur Weiterverarbeitung in eine Metallhütte gebracht oder zur Lagerung in einer Deponie aufbereitet werden. Das aus dem Schmelzofen 1 ausgetragene Schmelzgut ist ungiftig und kann problemlos deponiert, bzw. als Baumaterial verwendet werden.

Es ist jedoch auch vorstellbar, dass ein Teil der aus dem Filter 6 ausgetragenen, partikelförmigen Schwermetallverbindungen, wie durch eine Wirkungslinie 16 angedeutet, rückgeführt und dem Gas oder Gasgemisch beigemengt wird, welches durch die Leitung 5 der Mischstrecke 4 zugeführt wird. In der Mischstrecke 4 dienen diese partikelförmigen Schwermetallverbindungen als zusätzliche Kondensationskeime, welche eine beschleunigte Desublimation des verwirbelten Gas-Dampf-Gemisches ermöglichen.

In der Mischstrecke 4 bildet sich ein aus den durch Desublimation entstandenen Partikeln, den Resten des Gas-Dampf-Gemisches und dem zusätzlich zugeführten Gas oder Gasgemisch bestehendes Fluid.

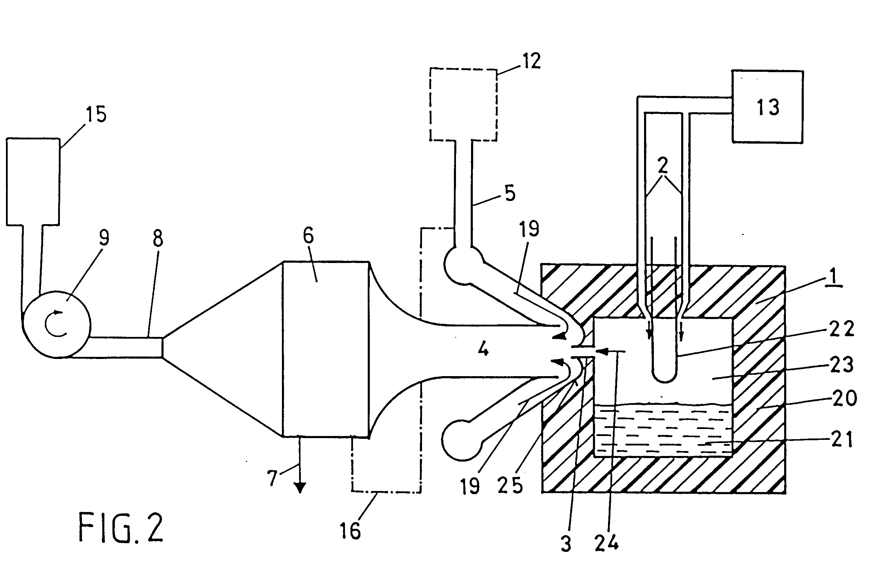

In Fig. 2 ist eine Vorrichtung dargestellt, in welcher das oben beschriebene Verfahren durchgeführt werden kann. Der Schmelzofen 1 ist gegen Wärmeverluste mit einer dicken Isolierschicht 20 geschützt. Die Beschickung des Ofens und die Austragung des Schmelzgutes aus der Schmelze 21 ist nicht dargestellt. Die Schmelze 21 wird durch elektrische, mit Luft beblasene Heizelemente 22 aufgeheizt; die für diese Beblasung nötige Strömung wird durch ein Gebläse 13 erzeugt. In einem Raum 23 über der Schmelze 21 wird die eingeströmte Luft erwärmt und sie vermischt sich mit den dampfförmigen Schwermetallverbindungen und weiteren Gasen wie z.B. CO₂ und SO₂, welche beim Schmelzen der in den Schmelzofen 1 eingetragenen Partikel, z.B. Filterstaubpartikel freigesetzt werden, zu einem Gas-Dampf-Gemisch. Dieses Gas-Dampf-Gemisch verlässt den Schmelzofen 1, wie der Pfeil 24 andeutet, durch eine Leitung 3.

Diese Leitung 3 muss sehr kurz sein, damit das Temperaturgefälle in dieser Leitung 3 nicht zur Desublimation von Teilen des Gas-Dampf-Gemisches führt. Die Temperatur im Innern des Schmelzofens 1 wird auf ca. 1300 °C gehalten, die Austrittstemperatur des Gas-Dampf-Gemisches aus der Leitung 3 darf den Temperaturbereich von 800 °C bis 900 °C nicht unterschreiten. Es ist empfehlenswert, die Leitung 3 dem Ofeninnern zu nach unten zu neigen, damit etwaige Desublimationsprodukte aus dieser Leitung 3 in die Schmelze 21 zurückfliessen und nochmals sublimieren können. Je nach der chemischen Zusammensetzung der Schmelze 21 kann das Zurückfliessen dieser Desublimationsprodukte auch unerwünscht sein, so dass eine Neigung der Leitung 3 nach aussen und eine Möglichkeit die nach aussen fliessenden Desublimationsprodukte ausserhalb des Schmelzofens 1 aufzufangen, in diesem Fall vorzuziehen ist.

Unmittelbar an die kurze Leitung 3 schliesst sich eine Mischstrecke 4 an. Durch eine Leitung 5 wird Kaltluft, wie durch Pfeile 19 angedeutet, in die Mischstrecke 4 eingeführt. Dieser Luftstrom wird durch einen Saugzug 9 aufrecht erhalten. Statt des Saugzuges 9 kann jedoch auch ein Gebläse 12, welches gestrichelt angedeutet ist, den Luftstrom erzeugen. Ferner ist eine Kombination von Saugzug 9 und Gebläse 12 denkbar. In der Mischstrecke 4 herrscht ein vergleichsweise kleiner Unterdruck, welcher die Strömung des Gas-Dampf-Gemisches durch die Leitung 3 beschleunigt, um so zu erreichen, dass die Desublimation der dampfförmigen Schwermetallverbindungen hauptsächlich in der Mischstrecke 4 stattfindet. Ferner ist die Isolationsschicht 20 in einer Zone 25 im Bereich um die Leitung 3 herum weniger dick ausgeführt, was einerseits erlaubt die Leitung 3 kürzer zu machen und andererseits Platz schafft für eine strömungsgünstige Zuführung der von der Leitung 5 eingespeisten Kaltluft. In der Mischstrecke 4 werden das Gas-Dampf-Gemisch und diese eingespeiste Kaltluft kräftig verwirbelt, wodurch eine intensive Abkühlung des Gas-Dampf-Gemisches erreicht wird. Durch Leitbleche und ähnliche bekannte Massnahmen kann eine besonders kräftige Verwirbelung erzielt werden. Die dampfförmigen Schwermetallverbindungen desublimieren, wobei kleine Staubpartikel, die aus dem Schmelzofen 1 mitgerissen wurden, als Kondensationskeime dienen, zudem tritt auch spontane Kondensation auf. Die so entstandenen Partikel aus Schwermetallverbindungen werden in einen Filter 6 gewirbelt und dort ausgefiltert und danach ausgetragen, wie durch den Pfeil 7 angedeutet. Nach dem Filter 6 führt eine Leitung 8 das Gas oder Gasgemisch mit verbliebenen Resten des Gas-Dampf-Gemisches in den Saugzug 9 und von dort in eine Verbrennungsanlage 15. Der gesamte Bereich der Vorrichtung, in dem dampfförmige Schwermetallverbindungen auftreten, ist gasdicht ausgeführt, um ein Austreten schädlicher Substanzen zu verhindern. Die durch den Pfeil 7 angedeutete Austragung ist staubdicht ausgeführt, um Umweltbelastungen durch die Partikel aus Schwermetallverbindungen zu vermeiden.

Ein Ausführungsbeispiel belegt, dass diese Vorrichtung gemäss Fig. 2 funktionsfähig ist. Sämtliche Volumenangaben sind bei diesem Beispiel auf Normaldruck und eine Raumtemperatur von 20 °C bezogen. Die Atmosphäre im Raum 23 des Schmelzofens 1 setzte sich wie folgt zusammen:
- 95 %: Luft (von der Heizelementbeblasung),
- 2 %: bei Zimmertemperatur kondensierte Schwermetallverbindungen, vor allem ZnCl₂, PbO, PbCl₂ usw., und
- 3 %: CO₂, SO₂ usw.

Die Temperatur im Ofeninnern lag bei 1300 °C. Durch die Leitung 3 wurden etwa 0,5 m³ pro Stunde ausgetragen, welche etwa 10 g Schwermetallverbindungen in Dampfform enthielten. In die Mischstrecke 4 trat das Gas-Dampf-Gemisch mit etwa 800 °C bis 900 °C ein und wurde bei Vermischung mit der 20-fachen Menge Kaltluft auf ca. 100 °C bis 150 °C abgekühlt. Wird hier die 100-fache Menge Kaltluft eingespeist, so resultieren Temperaturen von etwa 50 °C am Ende der Mischstrecke. Der Durchmesser der Leitung 3 betrug 4 cm, der Durchmesser der zylindrisch ausgebildeten Mischstrecke 20 cm. Die Länge der Mischstrecke 4 bis zum Filter 6 war 1 m. Als Filter 6 wurde ein Papierfilter mit einer Fläche von 0,35 m² und einer Porengrösse von weniger als 1 µm verwendet. Der Papierfilter wurde hier verwendet, um die mengenmässige Bestimmung der ausgefilterten Schwermetallverbindungen zu erleichtern. Diesem Papierfilter war ein elektrostatischer Filter nachgeschaltet. Der Abscheidegrad dieser Filter liegt bei den aufgetretenden Partikelgrössen höher als 98 %. Das Trägergas nach dem Filter wies folgende Zusammensetzung auf:
ca. 99,8 % Luft
ca. 0,2 % Co₂, SO₂ usw., und
weniger als 0,001 % Schwermetallverbindungen.

Die Temperatur des Trägergases war auf etwa 30 °C abgesunken.

Der Filter 6 kann auch als Schlauchfilter, als Gewebefilter oder als elektrostatischer Filter oder als Kombination mindestens zwei dieser Filterarten ausgebildet sein. Der elektrostatische Filter in einer selbstreinigenden Bauweise eignet sich besonders für einen kontinuierlichen Betrieb. Die anderen beiden Filtertypen sind für die Ausfilterung besonders feiner Partikel von Schwermetallverbindungen geeignet. Die Vorschaltung eines Zyklones vor den Filter 6 bringt Vorteile, wenn vergleichsweise grosse Partikel von Schwermetallverbindungen anfallen, da diese bereits vor dem Eintritt in den Filter 6 ausgetragen werden können.

Wird ein Teil der in die Mischstrecke 4 eingespeisten Kaltluft entlang der Innenwand dieser Mischstrecke 4 geführt, so wird mit Sicherheit eine unerwünschte Desublimation an dieser Innenwand vermieden und die Mischstrecke 4 braucht innen nicht gereinigt zu werden.

Das beschriebene Verfahren kann sowohl bei einer kontinuierlichen Austragung des Gas-Dampf-Gemisches aus dem Schmelzofen 1 als auch bei einer intermittierenden Austragung eingesetzt werden. Die Steuerung der Vorrichtung für die Durchführung des Verfahrens kann so ausgelegt werden, dass beide oben erwähnten Austragungsarten möglich sind. Ebenso ist es möglich, die durch die Wirkungslinie 16 angedeutete Rückführung von partikelförmigen Schwermetallverbindungen zu- und abzuschalten in Abhängigkeit von der Zusammensetzung der zu verarbeitenden Gas-Dampf-Gemische.

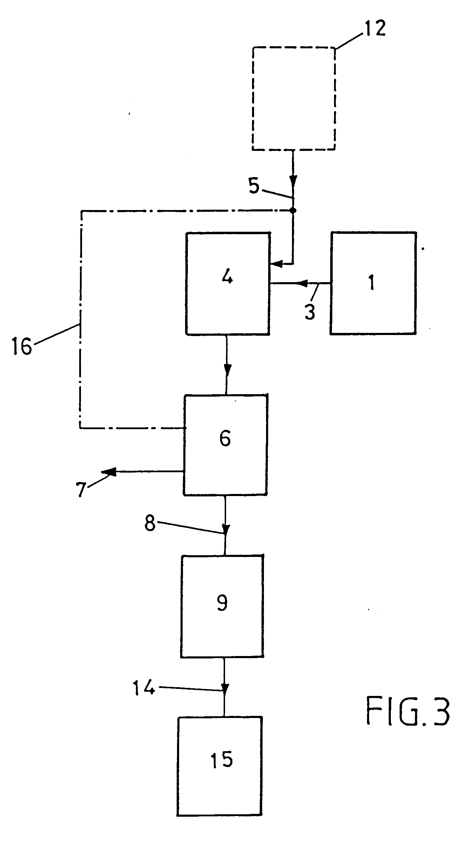

In Fig. 3 ist ein Blockdiagramm eines zweiten erfindungsgemässen Verfahrens dargestellt. Es unterscheidet sich von dem Blockdiagramm gemäss Fig. 1 lediglich dadurch, dass in den Schmelzofen 1 kein Trägergas in Gasform eingebracht wird, da die Heizelemente bei diesem Schmelzofen 1 nicht beblasen sind. Als Trägergas dient in diesem Fall ein Gemisch aus Gasen wie CO₂, SO₂ und ähnlichen Verbindungen, die beim Schmelzen der eingebrachten Partikel im Schmelzofen 1 neben den dampfförmigen Schwermetallverbindungen ebenfalls entstehen. In der Mischstrecke 4 wird dann, wie bereits beschrieben, Kaltluft mit diesem aus dem Schmelzofen 1 austretenden Gas-Dampf-Gemisch verwirbelt. Die übrigen Verfahrensschritte sind die gleichen, wie sie bereits beschrieben worden sind.

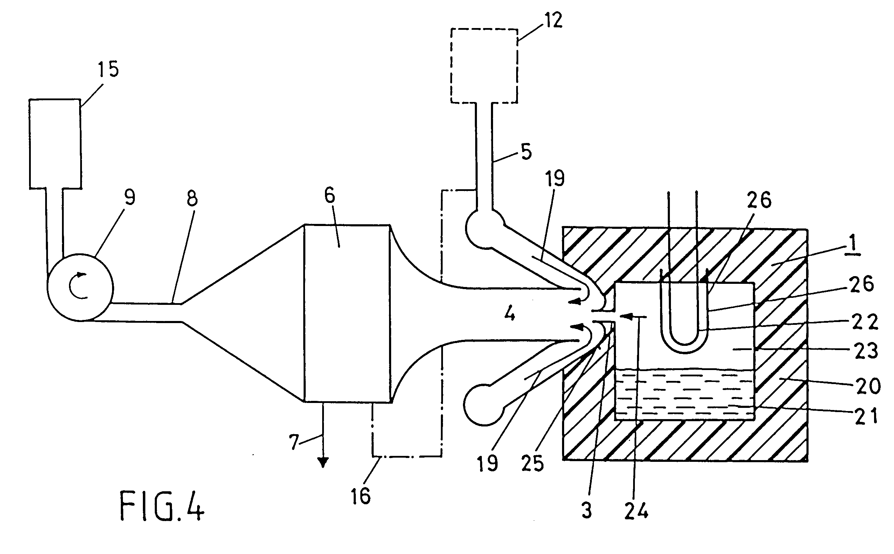

In Fig. 4 ist die dem Blockdiagramm Fig. 3 entsprechende Vorrichtung dargestellt. Die elektrischen Heizelemente 22 sind nicht mehr mit Luft beblasen, sondern ein Schutzrohr 26 umgibt das jeweilige Heizelement 22 und schottet es gegen den inneren Raum 23 des Schmelzofens 1 ab. Das Schutzrohr 26 besteht aus Keramikmaterial mit einem grossen Anteil Al₂O₃ und wird durch die korrosive Atmosphäre im Raum 23 nicht angegriffen. Das Schutzrohr 26 verhindert zudem, dass bei der Eintragung der Partikel in den Schmelzofen 1 aufgewirbelte Partikel sich an die Heizelemente 22 anlagern, an diesen schmelzen und deren Oberfläche angreifen können. Das Schutzrohr 26 kann als Kappe, wie dargestellt, ausgebildet sein, es kann jedoch auch als U-förmiges Rohr das jeweilige Heizelement 22 umgeben.

Folgendes Ausführungsbeispiel belegt, dass die Vorrichtung gemäss Fig. 4 funktionsfähig ist. Der Schmelzofen 1 wurde mit 300 g Filterstaub pro Stunde beschickt, wovon 258 g pro Stunde als Schmelze direkt aus dem Schmelzofen 1 ausgetragen wurden. Das ausgetragene Gas-Dampf-Gemisch betrug 42 g pro Stunde, wovon 30 g pro Stunde als Partikel im Filter 6 aufgefangen wurden. während 12 g pro Stunde als Rest des Gas-Dampf-Gemisches in die Verbrennungsanlage 15 geleitet wurden. Der Schmelzofen 1 wurde dabei mit einer Temperatur im Bereich von 1400 °C betrieben.

Beim Einschmelzen von Filterstäuben entsteht immer Trägergas wie z.B. ein Gemisch aus CO₂, SO₂ usw., weil entsprechende Verbindungen stets Bestandteil dieser Filterstäube sind. Das erfindungsgemässe Verfahren arbeitet jedoch auch mit vergleichsweise kleinen und kleinsten Mengen Trägergas und auch in dem Fall, wenn neben den dampfförmigen Schwermetallverbindungen in der Schmelze keine weiteren Dämpfe oder Gase entstehen. In diesem Fall reichern sich die dampfförmigen Schwermetallverbindungen im Raum 23 im Innern des Schmelzofens 1 solange an, bis sie von selbst ausströmen, bzw. durch den Unterdruck in der Mischstrecke 4 ausgetragen werden zur weiteren Verarbeitung.

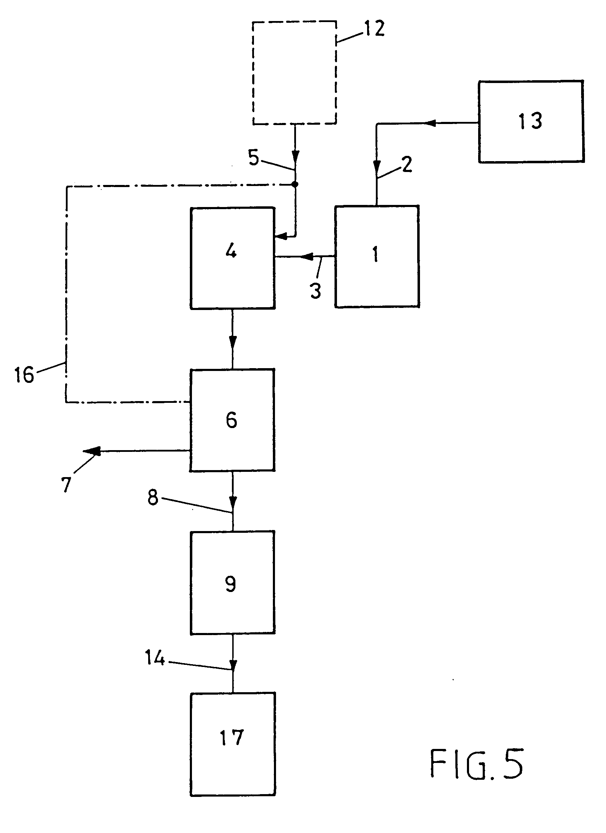

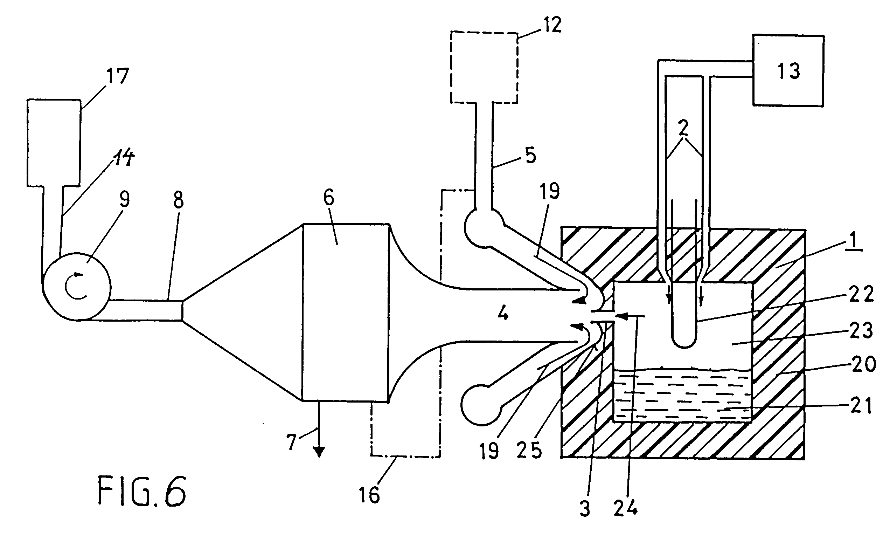

In Fig.5 ist ein Blockdiagramm eines dritten erfindungsgemässen Verfahrens dargestellt. Es unterscheidet sich von dem Blockdiagramm gemäss Fig.1 lediglich dadurch, dass nach dem Saugzug 9 das Gas oder Gasgemisch und die verbleibenden Reste des Gas-Dampf-Gemisches durch die Leitung 14 direkt in eine Rauchgasreinigungsanlage 17 geführt und dort gereinigt werden. In Fig.6 ist die dem Blockdiagramm Fig.5 entsprechende Vorrichtung schematisch dargestellt. Vorteilhaft ist bei dieser Anordnung, dass keine zusätzliche Energie für das Aufheizen der vergleichsweise grossen Menge Gas oder Gasgemisch und die verbleibenden Reste des Gas-Dampf-Gemisches in einer Verbrennungsanlage aufgebracht werden muss. Ferner wird, da das Volumen dieser Menge nicht durch Erwärmung vergrössert wird, eine bereits bestehende Rauchgasreinigungsanlage verwendet, so dass zusätzliche Investitionskosten für die aufwendige Rauchgasreinigung entfallen. Besonders bei Müllverbrennungsanlagen ist in der Regel bereits eine Rauchgasreinigungsanlage vorhanden, so dass für die erfindungsgemässe Vorrichtung die bestehende Rauchgasreinigungsanlage mitbenutzt werden kann. Die anfallenden Filteraschen können deshalb sehr wirtschaftlich am Ort des Entstehens unschädlich gemacht werden.

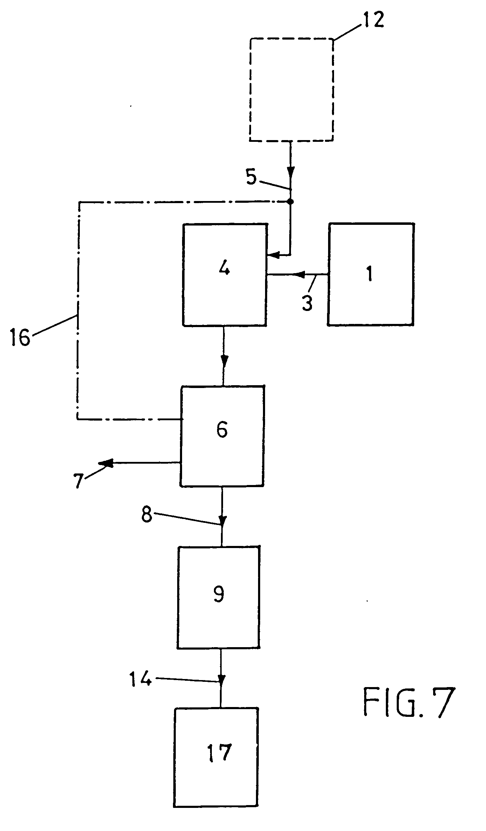

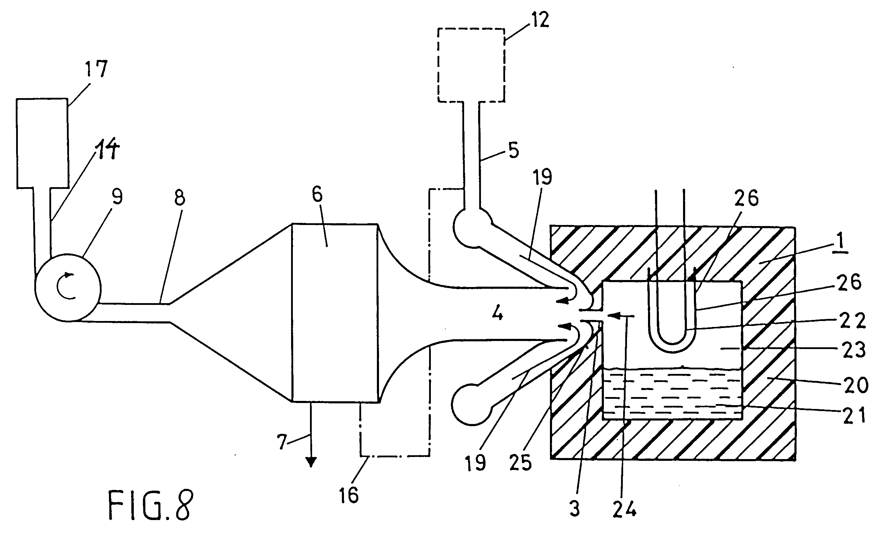

In Fig.7 ist ein Blockdiagramm eines vierten erfindungsgemässen Verfahrens dargestellt. Es unterscheidet sich vom Blockdiagramm gemäss Fig.3 lediglich dadurch, dass nach dem Saugzug 9 die Leitung 14 direkt in eine Rauchgasreinigungsanlage 17 führt. In Fig.8 ist die dem Blockdiagramm Fig.7 entsprechende Vorrichtung dargestellt. Die Vorteile dieser Anordnung sind bereits im Zusammenhang mit den Fig.5 und 6 beschrieben worden.

## Patentansprüche

1. Verfahren zur Trennung von dampfförmigen Schwermetallverbindungen von einem Trägergas und zur Desublimation derselben, bei welchem die in mindestens einem Schmelzofen (1) entstandenen dampfförmigen Schwermetallverbindungen zusammen mit dem Trägergas als Gas-Dampf-Gemisch aus diesem Schmelzofen (1) ausgetragen werden und anschliessend desublimieren, dadurch gekennzeichnet,
- dass das Gas-Dampf-Gemisch unmittelbar nach der Austragung in mindestens einer Mischstrecke (4) mit einem zusätzlichen, kühlen Gas oder Gasgemisch verwirbelt wird,
- dass hierbei durch Desublimation der dampfförmigen Schwermetallverbindungen gebildete Partikel und Reste des Gas-Dampf-Gemisches ein Fluid bilden, und
- dass dieses Fluid nachfolgend durch mindestens einen die Partikel absorbierenden Filter (6) geführt wird.

2. Verfahren nach Anspruch 1, dadurch gekennzeichnet,
- dass das Trägergas zumindest teilweise in den mindestens einen Schmelzofen (1) eingebracht wird.

3. Verfahren nach Anspruch 1, dadurch gekennzeichnet,
- dass das Gas-Dampf-Gemisch kontinuierlich oder intermittierend aus dem mindestens einen Schmelzofen (1) ausgetragen wird.

4. Verfahren nach Anspruch 1, dadurch gekennzeichnet,
- dass das Gas-Dampf-Gemisch in der mindestens einen Mischstrecke (4) mit mindestens der 10- bis 100-fachen Volumenmenge Gas oder Gasgemisch verwirbelt wird.

5. Verfahren nach Anspruch 1, dadurch gekennzeichnet,
- dass die Strömungsgeschwindigkeit des aus dem mindestens einen Schmelzofen (1) ausströmenden Gas-Dampf-Gemisches zusätzlich durch einen Unterdruck in der mindestens einen Mischstrecke (4) erhöht wird, und
- dass dieser Unterdruck entweder durch mindestens einen dem Filter (6) nachgeschalteten Saugzug (9) oder durch das durch ein Gehäuse (12) in die mindestens eine Mischstrecke (4) hineingeblasene Gas oder Gasgemisch aufrechterhalten wird.

6. Verfahren nach Anspruch 1, dadurch gekennzeichnet,
- dass ein Teil des zusätzlichen Gas oder Gasgemisches Innenwände der mindestens einen Mischstrecke (4) bestreicht und damit das Desublimieren der dampfförmigen Schwermetallverbindungen an diesen Innenwände verhindert.

7. Verfahren nach Anspruch 1, dadurch gekennzeichnet,
- dass die mindestens eine Mischstrecke (4) so dicht beim Schmelzofen (1) angeordnet ist, dass in ihr das gesamte Desublimieren der dampfförmigen Schwermetallverbindungen stattfindet.

8. Verfahren nach Anspruch 1, dadurch gekennzeichnet,
- dass das Gas oder Gasgemisch mit verbliebenen Resten des Gas-Dampf-Gemisches nach dem Filter (6) in eine Verbrennungsanlage (15) oder in eine Rauchgasreinigungsanlage (17) geleitet wird.

9. Verfahren nach Anspruch 8, dadurch gekennzeichnet,
- dass als Rauchgasreinigungsanlage (17) eine bereits bestehende Rauchgasreinigungsanlage (17) verwendet wird.

10. Vorrichtung zur Durchführung des Verfahrens gemäss Anspruch 1, mit mindestens einem Schmelzofen (1) mit mindestens einem Heizelement (22), in welchem ein Trägergas mit den dampfförmigen Schwermetallverbindungen ein Gas-Dampf-Gemisch bildet, und mit mindestens einer Austragöffnung (Leitung 3) für das Gas-Dampf-Gemisch, welche zu mindestens einer Kühleinrichtung führt, dadurch gekennzeichnet,
- dass der Austragöffnung (Leitung 3) als Kühleinrichtung mindestens eine mit Unterdruck beaufschlagte Mischstrecke (4) unmittelbar nachgeschaltet ist,
- dass am ofenseitigen Ende der Mischstrecke (4) Mittel vorgesehen sind, welche die Zuführung von zusätzlichem Gas oder Gasgemisch und dessen Verwirbelung mit dem Gas-Dampf-Gemisch ermöglichen, und
- dass dieser Mindestens einen Mischstrecke (4) mindestens ein Filter (6) nachgeschaltet ist.

11. Vorrichtung nach Anspruch 10, dadurch gekennzeichnet,
- dass dem mindestens einen Filter (6) mindestens ein Saugzug (9) nachgeschaltet ist, oder dass mindestens ein Gebläse (12) für die Zuführung des zusätzlichen Gases oder Gasgemisches in die mindestens eine Mischstrecke (4) vorgesehen ist.

12. Vorrichtung nach Anspruch 10, dadurch gekennzeichnet,
- dass der mindestens eine Filter (6) als elektrostatischer Filter oder als Schlauchfilter oder als Gewebefilter oder als eine Kombination von mindestens zwei dieser Filterarten ausgebildet ist.

13. Vorrichtung nach Anspruch 10, dadurch gekennzeichnet,
- dass dem mindestens einen Filter (6) mindestens ein Zyklon vorgeschaltet ist.

14. Vorrichtung nach Anspruch 10, dadurch gekennzeichnet,
- dass der Filter (6) in Wirkverbindung steht mit einer Verbrennungsanlage (15) oder mit einer Rauchgasreinigungsanlage (17).

15. Vorrichtung nach Anspruch 14, dadurch gekennzeichnet,
- dass als Rauchgasreinigungsanlage (17) eine bereits bestehende Rauchgasreinigungsanlage (17) vorgesehen ist.

16. Vorrichtung nach Anspruch 10, dadurch gekennzeichnet,
- dass das mindestens eine Heizelement (22) von mindestens einem Schutzrohr (26) gegen einen inneren Raum (23) des Schmelzofens (1) abgeschottet ist.

## Claims

1. Process for separating vapourous heavy metal compounds from a carrier gas and desubliming them, in which the vapourous heavy metal compounds formed in at least one melting furnace (1) are discharged together with the carrier gas as a gas/vapour mixture from this melting furnace (1) and then desublimed, characterised in that
- the gas/vapour mixture is turbulently mixed immediately after the discharge in at least one mixing section (4) with an additional, cool gas or gas mixture,
- particles formed here by desublimation of the vapourous heavy metal compounds and residues of the gas/vapour mixture form a fluid, and
- this fluid is then passed through at least one filter (6) which absorbs the particles.

2. Process according to Claim 1, characterised in that the carrier gas is at least partially introduced into the melting furnace (1) of which there is at least one.

3. Process according to Claim 1, characterised in that the gas/vapour mixture is discharged continuously or intermittently from the melting furnace (1) of which there is at least one.

4. Process according to Claim 1, characterised in that the gas/vapour mixture is turbulently mixed in the mixing section (4), of which there is at least one, with at least 10 to 100 times the quantity by volume of gas or gas mixture.

5. Process according to Claim 1, characterised in that the flow velocity of the gas/vapour mixture flowing out of the melting furnace (1), of which there is at least one, is additionally increased by reduced pressure in the mixing section (4) of which there is at least one, and this reduced pressure is maintained either by at least one suction fan (9) located downstream of the filter (6) or by the gas or gas mixture blown into the mixing section (4), of which there is at least one, by a blower (12).

6. Process according to Claim 1, characterised in that a part of the additional gas or gas mixture sweeps over the inside walls of the mixing section (4), of which there is at least one, and thus prevents desublimation of the vapourous heavy metal compounds on these inside walls.

7. Process according to Claim 1, characterised in that the mixing section (4), of which there is at least one, is located so near to the melting furnace (1) that the entire desublimation of the vapourous heavy metal compounds takes place therein.

8. Process according to Claim 1, characterised in that the gas or gas mixture with remaining residues of the gas/vapour mixture is passed downstream of the filter (6) into an incineration unit (15) or into a flue gas purification unit (17).

9. Process according to Claim 8, characterised in that the flue gas purification unit (17) used is an already existing flue gas purification unit (17).

10. Apparatus for carrying out the process according to Claim 1, having at least one melting furnace (1) with at least one heating element (22), in which a carrier gas forms a gas/vapour mixture with the vapourous heavy metal compounds, and having at least one discharge opening (line 3) for the gas/vapour mixture, which leads to at least one cooling device, characterised in that
- at least one mixing section (4) subjected to a reduced pressure is provided as a cooling device immediately downstream of the discharge opening (line 3),
- means which allow additional gas or gas mixture to be fed in and to be mixed turbulently with the gas/vapour mixture are provided at the furnace end of the mixing section (4), and
- at least one filter (6) is provided downstream of this mixing section (4) of which there is at least one.

11. Apparatus according to Claim 10, characterised in that at least one suction fan (9) is provided downstream of the filter (6), of which there is at least one, or at least one blower (12) for feeding the additional gas or gas mixture into the mixing section (4), of which there is at least one, is provided.

12. Apparatus according to Claim 10, characterised in that the filter (6), of which there is at least one, is designed as an electrostatic filter or as a hose filter or as a fabric filter or as a combination of at least two of these filter types.

13. Apparatus according to Claim 10, characterised in that at least one cyclone is provided upstream of the filter (6), of which there is at least one.

14. Apparatus according to Claim 10, characterised in that the filter (6) is interactively connected to an incineration unit (15) or to a flue gas purification unit (17).

15. Apparatus according to Claim 14, characterised in that the flue gas purification unit (17) provided is an already existing flue gas purification unit (17).

16. Apparatus according to Claim 10, characterised in that the heating element (22) of which there is at least one, is isolated from an interior space (23) of the melting furnace (1) by at least one protective sheath (26).

## Revendications

1. Méthode de séparation de composés de métaux lourds à l'état de vapeur d'un gaz vecteur et de désublimation de ces derniers, dans laquelle les composés de métaux lourds a l'état de vapeur qui sont formés dans au moins un four de fusion (1) sont extraits de ce four de fusion (1) conjointement au gaz vecteur en tant que mélange vapeur/gaz et sont ensuite désublimés, caractérisée en ce que
- le mélange vapeur/gaz est soumis, immédiatement après l'extraction, à un régime tourbillonnaire dans au moins une section de mélange (4) avec un gaz ou un mélange de gaz supplémentaire froid,
- les particules formées par la désublimation des composés de métaux lourds à l'état de vapeur et le reste du mélange vapeur/gaz forment ainsi un fluide, et
- ce fluide est subséquemment passé à travers au moins un filtre (6) qui absorbe les particules.

2. Méthode selon la revendication 1, caractérisée en ce que
- le gaz vecteur est introduit au moins partiellement dans le au moins un four de fusion (1).

3. Méthode selon la revendication 1, caractérisée en ce que
- le mélange vapeur/gaz est extrait de façon continue ou de façon intermittente du au moins un four de fusion.

4. Méthode selon la revendication 1, caractérisée en ce que
- le mélange vapeur/gaz est soumis à un régime tourbillonnaire dans la au moins une section de mélange (4) avec un volume de gaz ou de mélange de gaz 10 à 100 fois plus important.

5. Méthode selon la revendication 1, caractérisée en ce que
- la vitesse d'écoulement du mélange vapeur/gaz qui s'écoule du au moins un four de fusion (1) est augmentée de plus par une dépression dans la au moins une section de mélange (4), et
- cette dépression est maintenue soit par l'intermédiaire d'au moins un tirage par aspiration (9) placé après le filtre (6) soit par un gaz ou un mélange de gaz insufflé à travers un bâti (12) dans la au moins une section de mélange (4).

6. Méthode selon la revendication 1, caractérisée en ce que
- une partie du gaz ou du mélange de gaz supplémentaire balaye les parois internes de la au moins une section de mélange (4) et empêche ainsi la désublimation des composés de métaux lourds à l'état de vapeur sur ces parois internes.

7. Méthode selon la revendication 1, caractérisée en ce que
- la au moins une section de mélange (4) est placée à une proximité telle du four de fusion (1) que la désublimation complète des composés de métaux lourds à l'état de vapeur a lieu dans ce dernier.

8. Méthode selon la revendication 1, caractérisée en ce que
- le gaz ou le mélange de gaz avec les restes du mélange vapeur/gaz après le filtre (6) est introduit dans une installation de combustion (15) ou une installation de purification de gaz brûlés (17).

9. Méthode selon la revendication 8, caractérisée en ce que
- une installation de purification de gaz brûlés (17) déjà existante est utilisée en tant qu'installation de purification de gaz brûlés (17).

10. Dispositif pour la mise en oeuvre du procédé selon la revendication 1, avec au moins un four de fusion (1) ayant au moins un élément de chauffage (22), dans lequel un gaz vecteur avec les composés de métaux lourds à l'état de vapeur forment un mélange vapeur/gaz, et au moins un orifice d'extraction (conduite 3) pour le mélange vapeur/gaz, qui conduit à au moins une installation de refroidissement, caractérisé en ce que
- l'orifice d'extraction (conduite 3) est immédiatement suivie d'au moins une section de mélange (4) soumise à dépression en tant qu'installation de refroidissement,
- à l'extrémité de la section de mélange (4) qui fait face au four sont prévus des moyens qui permettent l'admission d'un gaz ou d'un mélange de gaz supplémentaire et son tourbillonnement avec le mélange vapeur/gaz, et
- cette au moins une section de mélange (4) est suivie d'au moins un filtre (6).

11. Dispositif selon la revendication 10, caractérisé en ce que
- le au moins un filtre (6) est suivi d'au moins un tirage par aspiration (9) ou qu'au moins une soufflante (12) pour l'admission du gaz ou du mélange de gaz supplémentaire est prévue dans la au moins une section de mélange (4).

12. Dispositif selon la revendication 10, caractérisé en ce que
- le au moins un filtre (6) a une configuration de filtre électrostatique ou de filtre à manche ou de filtre texturé ou se présente sous la forme d'une combinaison d'au moins de ces types de filtres.

13. Dispositif selon la revendication 10, caractérisé en ce que
- le au moins un filtre (6) est précédé d'au moins un séparateur à cyclone.

14. Dispositif selon la revendication 10, caractérisé en ce que
- le filtre (6) est en relation opérationnelle avec une installation de combustion (15) ou avec une installation de purification de gaz brûlés (17).

15. Dispositif selon la revendication 14, caractérisé en ce que
- une installation de purification de gaz brûlés (17) déjà existante est prévue en tant qu'installation de purification de gaz brûlés (17).

16. Dispositif selon la revendication 10, caractérisé en ce que
- le au moins un élément de chauffage (22) est cloisonné par l'intermédiaire d'au moins un tuyau de protection (26) contre un logement interne (23) du four de fusion (1).
